# EUROPEAN PATENT APPLICATION

(11) **EP 2 180 227 A1**
(43) Date of publication of application: **28.04.2010**
(21) Application number: 09251826.5
(22) Date of filing: 17.07.2009
(51) Int. Cl.: F16L 47/16, F16L 47/24

(54) **Tube fitting**

(30) Priority: 23.10.2008 JP 2008273536
(71) Applicant: Yugen Kaisha Hama International, Okaya-shi Nagano 394-0034 (JP)
(72) Inventor: Hama, Tomio, Okaya-shi, Nagano 394-0035 (JP); Hamaue, Yuji, Okaya-shi, Nagano 394-0035 (JP)
(74) Representative: Gill, Stephen Charles

(57) **Abstract**

A tube fitting (1) is provided which is able to be easily attached even in a narrow attaching place. The tube fitting (1) includes one or more fitting parts (4) to be connected to an external tube (60) formed at one end of a main body (2) and a screw part for attachment (3) formed at another end of the main body (2), wherein fluid passes through an inside part thereof and wherein the screw part for attachment (3) has, at its external circumference, screw threads and, in its inside part, a tool connecting part into which a non-inverse and inverse rotation tool to rotate the screw part for attachment (3) non-inversely and inversely is allowed to be fitted, and a pipe path (17) through which fluid passes.

## Description

### 1. Field of the Invention

The present invention relates to a tube fitting and more particularly to the tube fitting having, at its one end, one or more fitting parts to be connected to an external tube and, at its another end, a screw part for attachment, in which fluid passes through an inside of the tube fitting.

### 2. Description of the Related Art

Recently, due to increased variety of fluid which passes through tube fittings with external tubes being connected to, tube fittings using widely, as a material, a resin excellent in corrosion resistance are becoming widespread.

As an example of a conventional tube fitting, one tube fitting 100 is disclosed in Patent Reference 1 (Japanese Patent Application Laid-open No. 2008-64169). As shown in Fig. 14, the disclosed tube fitting 100 is made of a resin material and a metal material, which has, at its one end, a resin pipe coupling part 106 which is made of a resin and can couple a resin pipe and also has, at its another end, a pipe member connecting part 107 made of a metal being capable of connecting a pipe member. The pipe member connecting part 107 is made up of a connecting mechanism 115 and an insert sleeve 117 one end of which is insert-molded in the resin pipe coupling part 106 and to another end of which an attaching part 116 for the connecting mechanism 115 is attached.

In the conventional tube fitting as described in the Patent Reference 1, generally, in order to withstand high torque acted by a tool at a time of attachment, the attaching part 116 is configured to be made of a metal material and formed at an external circumference of the pipe member connecting part 107. However, problems arise in that, due to the use of the metal material, an increase in manufacturing costs caused by increased number of working processes is unavoidable and, due to formation of the attaching part at the external circumference of the pipe member connecting part 107, events occur that a non-inverse and inverse rotation tool (in the conventional case, a spanner is used as the tool) is not allowed to be inserted into the tube fitting or is not rotated in a narrow attaching place, thus causing the attachment to become impossible.

### SUMMARY

In view of the above, it is an object of the present invention to provide a tube fitting able to be easily attached even in a narrow attaching place.

According to an aspect of the present invention, there is provided a tube fitting including one or more fitting parts to be connected to an external tube formed at one end of a main body and a screw part for attachment formed at another end of the main body, wherein fluid passes through an inside part of the tube fitting and wherein the screw part for attachment has, at its external circumference, screw threads and, in its inside part, a tool connecting part into which a non-inverse and inverse rotation tool to rotate the screw part (i.e. a rotation tool which can rotate and counter-rotate the screw part) for attachment non-inversely and inversely is allowed to be fitted, and a pipe path through which fluid passes.

By configuring as above, the non-inverse and inverse rotation tool can be inserted in an inside part of the screw part for attachment for coupling and rotation and, therefore, unlike in the conventional tube fitting requiring a wide space for the rotation, even in a very narrow place, the screw part for attachment can be allowed to be rotated non-inversely and inversely so that the tube fitting is attached thereto.

In the present invention, part or all of the pipe path may be formed in the tool connecting part into which the non-inverse and inverse rotation tool to rotate the screw part for attachment non-inversely or inversely is inserted so as to be fitted.

By configuring as above, the tool connection part can be formed inside the screw part for attachment and the tool connecting part can serve also as the pipe path, thus enabling the miniaturization of the screw part for attachment.

Also, in the present invention, the fitting part may be provided with an opening part into which the external tube is inserted and the opening part may be formed so as to be large enough to allow the non-inverse and inverse rotation tool to be inserted for non-inverse and inverse rotation.

By configuring as above, the screw part for attachment can be rotated non-inversely and inversely by inserting the non-inverse and inverse rotation tool from the opening part.

Also, in the present invention, a central axis of the opening part may not coincide with a central axis of the pipe path and the fitting part may have a tool insertion opening being large enough to allow the non-inverse and inverse rotation tool to be inserted into the main body for non-inverse and inverse rotation and a lid part may be provided to hermetically seal or open the tool insertion opening.

By configuring as above, in the case where the non-inverse and inverse rotation tool cannot be inserted so as to be fitted into the tool connecting part, that is, through-hole by inserting the non-inverse and inverse rotation tool from the opening part, by inserting the non-inverse and inverse rotation tool from the tool insertion opening, the screw part for attachment can be rotated non-inversely and inversely. Moreover, the formed lid can seal the tool insertion opening at time of passage of fluid.

Also, in the present invention, the main body and the screw part for attachment may be coaxially formed and connected to each other so as to be rotated non-inversely and inversely.

By configuring as above, only the screw part for attachment can be rotated non-inversely and inversely while the direction of the fitting part is fixed.

Also, in the present invention, the tube fitting may further include a flow rate control mechanism to adjust a flow rate of fluid passing between the fitting part and the screw part for attachment.

By configuring as above, in a narrow place, the tube fitting having the flow rate control mechanism can be attached.

Also, in the present invention, the screw part for attachment may have an insert core in a central part in an axial direction and, at an external circumference of the insert core, a screw thread member having mail-screw shaped screw threads made of a material being softer than a material for the insert core may be formed in a state of being intimately contacted to the insert core.

By configuring as above, the shape of the screw thread of the screw thread member made of a soft material can be changed so as to fill a clearance in a manner to correspond to a screw shape of a screw to be screwed so that both the screws are intimately contacted with each other and, therefore, sealing property can be improved.

Also, in the present invention, the insert core may be provided with the pipe path.

By configuring as above, the pipe path serving as the tool connecting part can be formed in the insert core made of a hard material.

Also, in the present invention, a cross section of a part serving also as the tool connecting part in the pipe path may have a shape of a polygon or an elliptic through hole.

By configuring as above, the screw part for attachment can be rotated non-inversely and inversely by inserting the tool into the through-hole serving as the tool connecting part.

Also, in the present invention, the screw thread member may be sandwiched by larger-diameter parts each formed in a front end part of the insert core and in a rear end part or in an intermediate part being nearer to the tip part rather than the rear end part of the insert core.

By configuring as above, it may be possible to prevent the screw thread member from deformation and flowing-out in both the direction of screwing in an axial direction and the direction reverse to the above direction at time of coupling and to prevent the screw thread member from being deviated in position between the insert core and screw thread member caused by deformation in the screwing direction and in a direction reverse to the screwing direction. This may enable looseness in coupling to be avoided for a long time.

Also, in the present invention, at an external circumference of the larger-diameter part formed in the front end part of the insert core, screw threads of the screw thread member may be continuously formed.

By configuring as above, by forming screw threads at an external circumference of the larger-diameter part of the front end part in a manner to stand in line with screw threads of the screw thread member, these screw thread can function integrally as one screw and an optimized effect of suppressing the deformation of screw threads of the screw thread member may be realized.

Also, in the present invention, the screw thread member may be formed so as to have a tapered screw shape.

By configuring as above, when the screw thread member is formed so as to have the tapered screw shape, that is, when compression force occurs in a diameter direction, the shape of the screw thread of the screw thread member made of a soft material can be changed so as to fill a clearance in a manner to correspond to a screw shape of a screw to be screwed so that both the screws are intimately contacted with one another and, therefore, sealing property can be remarkably improved.

Also, in the present invention, positions of crest parts and root parts of the threads formed at the circumference of the screw thread member may coincide, in an axial line direction, with positions of crest parts and root parts of the threads formed at the circumference of the insert core.

By configuring as above, at an external circumference of the insert core, the thickness of the screw thread member can be made uniform, which force occurring at time of coupling can be uniformly acted thereon, thus enabling effective prevention of deformation.

Also, in the present invention, at an external circumference of the insert core, a plurality of ribs each partitioning root parts of thread making up the screw shape may be formed in a circumferential direction.

By configuring as above, even if high load is imposed between the insert core and screw thread member at time of coupling, positional deviation and deformation in a circumferential direction may be prevented.

Also, in the present invention, at an external circumference of the insert core, a plurality of protruded parts extending in an axial direction or a plurality of grooves may be formed.

By configuring as above, as in the above case, even if high load is imposed between the insert core and screw thread member at time of coupling, positional deviation and deformation in a circumferential direction may be prevented.

Also, in the present invention, the insert core may be made of a polyamide MXD6 resin or a polyphenyl sulfide resin.

By configuring as above, the insert core may be made excellent in strength, thermal resistance, elastic strength, chemical resistance and dimensional stability, which can enable the tool to be inserted so as to be fitted and to be used in good conditions and can enable the insert core serving as the screw member to withstand high load.

Furthermore, in the present invention, the screw thread member formed in a state of being intimately contacted with the insert core may be made of a polybutylene terephthalate resin.

By configuring as above, the screw thread member may be made excellent in thermal stability, dimensional accuracy, and electric characteristics, which can enable the screw thread member to be suitably used as a component formed at an external circumference.

With the above configuration, the tool connecting part to connect a non-inverse and inverse rotation tool for rotating the screw part for attachment non-inversely and inversely may be formed inside the screw part for attachment, not at an external circumference of the screw part for attachment and, therefore, the tube fitting can be attached easily even in a narrow attaching place.

### BRIEF DESCRIPTION OF THE DRAWINGS

The above and other objects, advantages, and features of the present invention will be more apparent from the following description taken in conjunction with the accompanying drawings in which:
Fig. 1 is a schematic view of an example of a tube fitting according to a first embodiment of the present invention;
Figs. 2A, 2B, and 2C are schematic views showing a configuration of a sleeve of a connecting mechanism of the tube fitting of Fig. 1;
Figs. 3A, 3B, and 3C are schematic views showing a configuration of a locking member of the connecting mechanism of the tube fitting of Fig. 1;
Figs. 4A and 4B are schematic views showing a configuration of a screw part for attachment making up the tube fitting of Fig. 1;
Fig. 5 is an enlarged view showing a configuration of an intimate coupling part between a screw thread member of the screw part for attachment and an insert core of the screw part for attachment;
Fig. 6 is an enlarged view showing a configuration of an outer circumferential part of the insert core of the screw part for attachment;
Figs. 7A and 7B are schematic views showing a configuration of the insert core of the screw part for attachment;
Fig. 8 is a schematic view of an example of a tube fitting according to a second embodiment of the present invention;
Fig. 9 is a schematic view of an example of a tube fitting according to a third embodiment of the present invention;
Fig. 10 is a schematic view showing a state in which a cap part has been detached from the tube fitting in Fig. 9 according to the third embodiment;
Figs. 11A and 11B are schematic views showing a configuration of the cap part of the tube fitting according to the third embodiment;
Fig. 12 is a schematic view of an example of a tube fitting according to a fourth embodiment of the present invention;
Fig. 13 is a schematic view of an example of a tube fitting according to a fifth embodiment of the present invention; and
Fig. 14 is a schematic view of an example of a conventional tube fitting.

### DESCRIPTION OF EMBODIMENTS

Best modes of carrying out the present invention will be described in further detail using various embodiments with reference to the accompanying drawings.

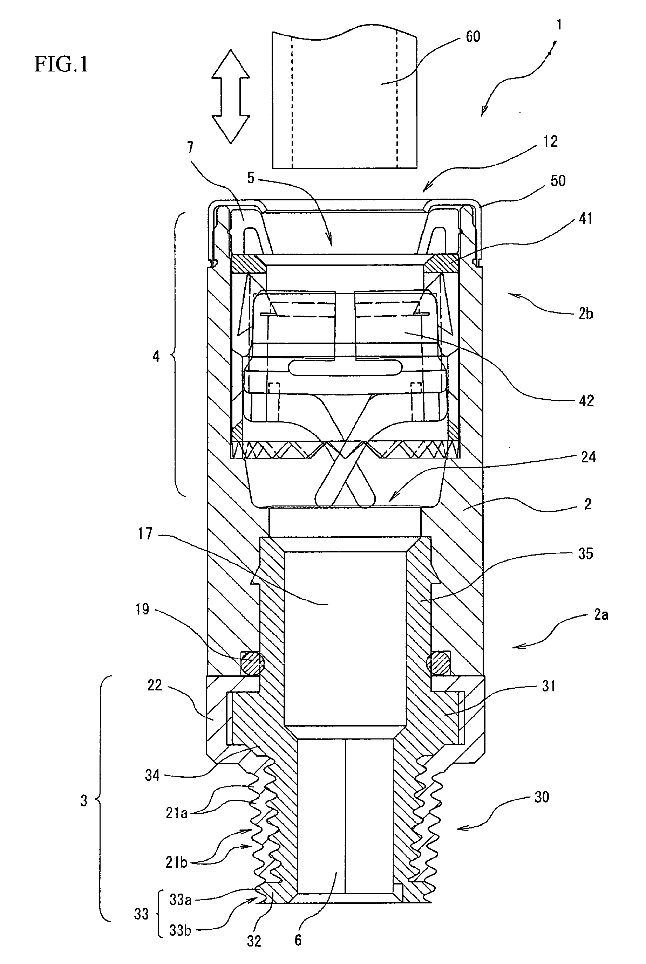

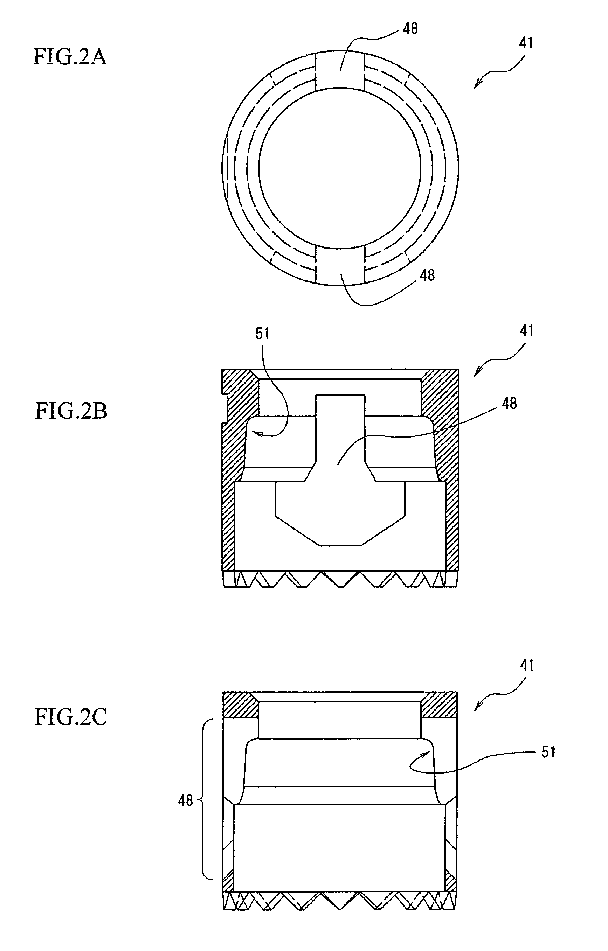

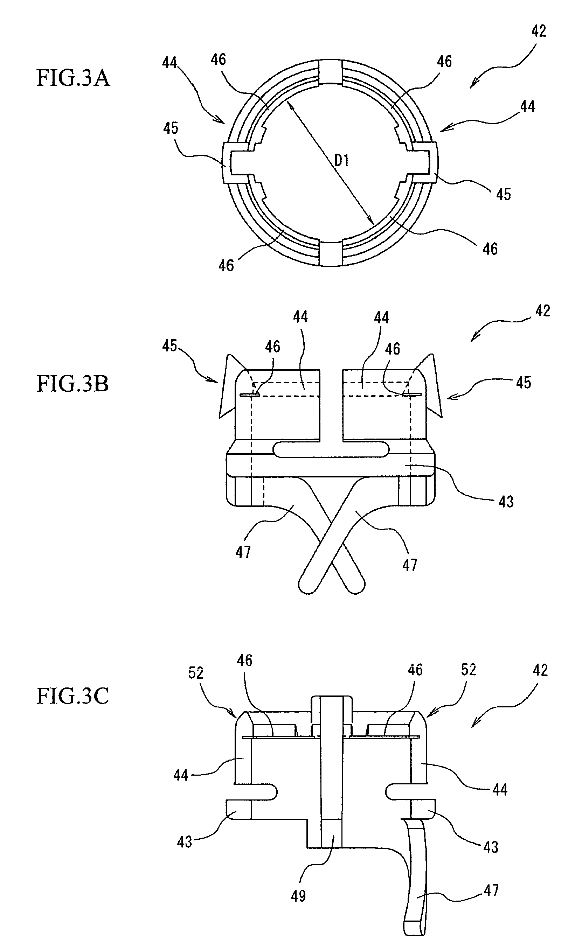

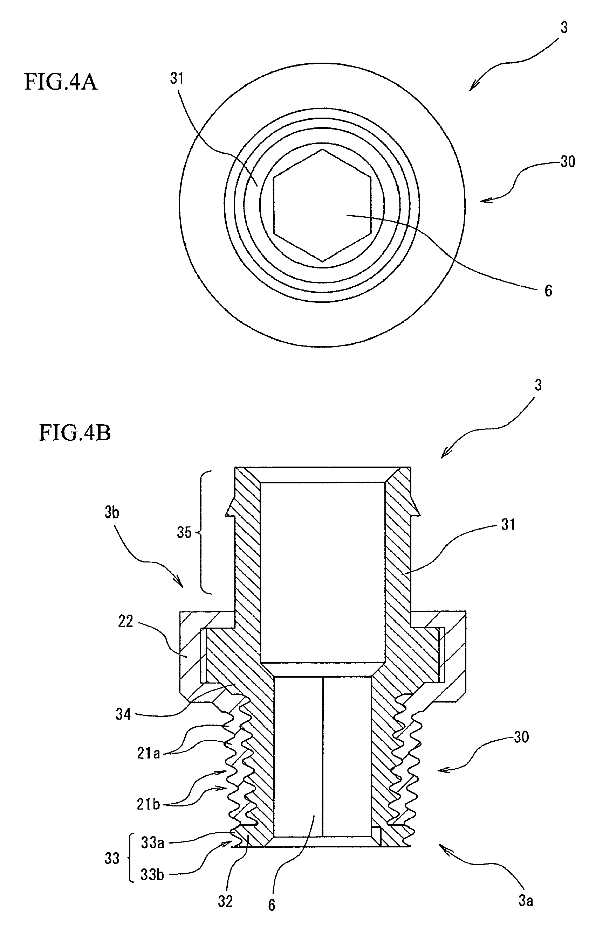

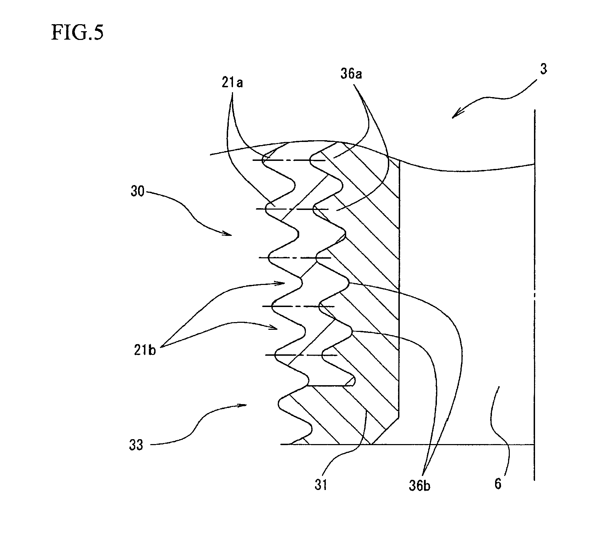

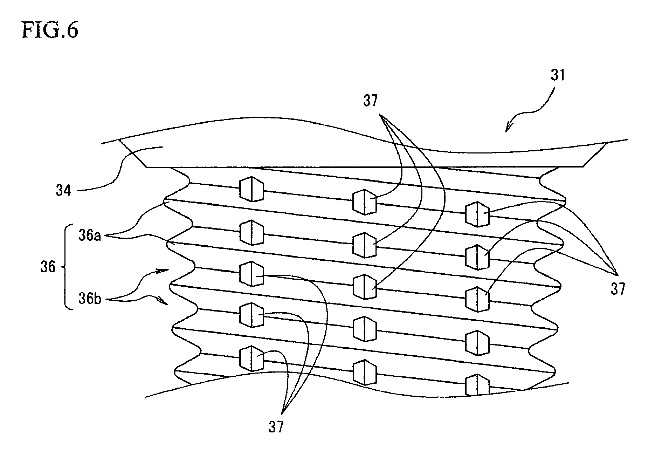

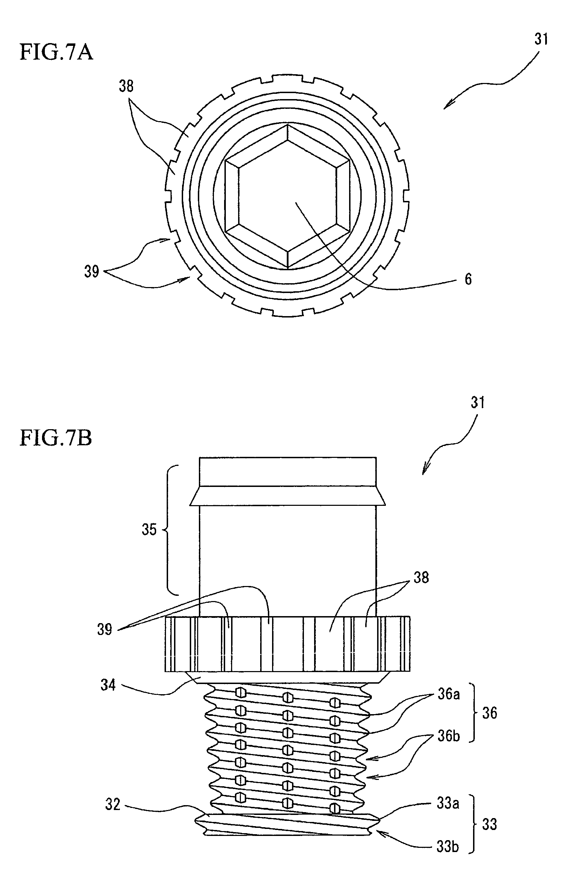

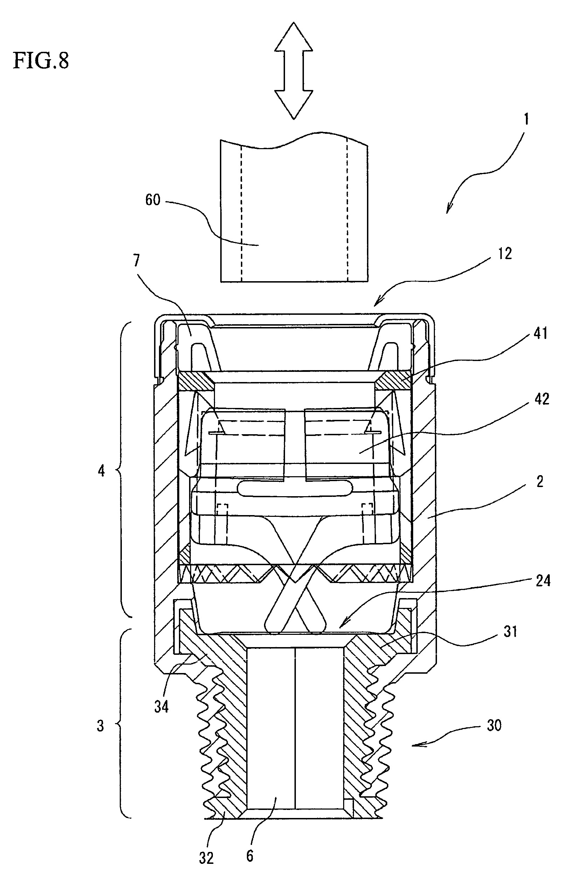

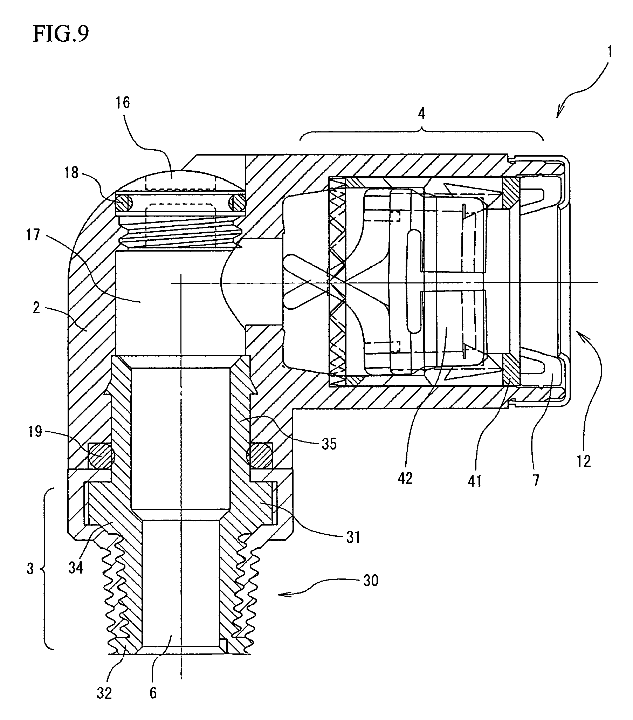

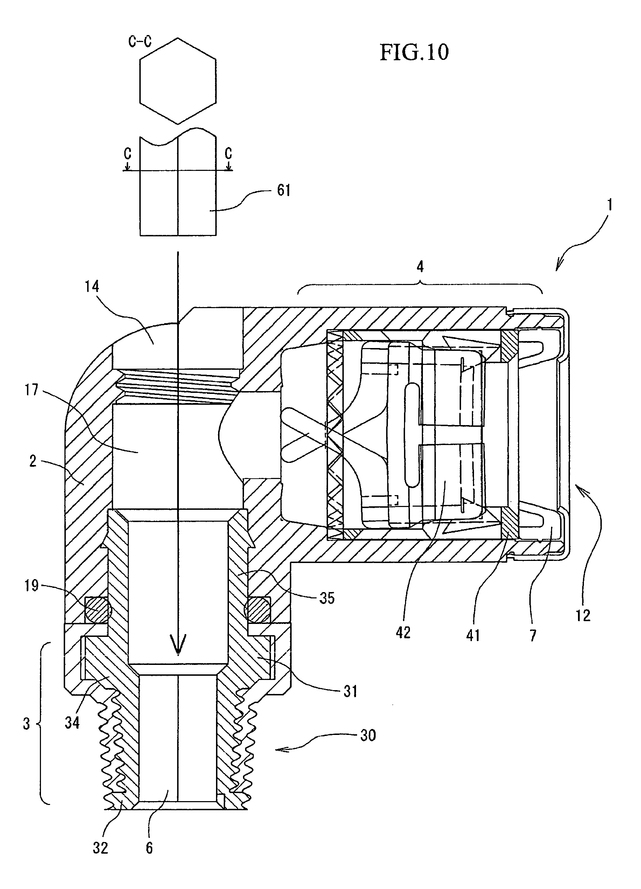

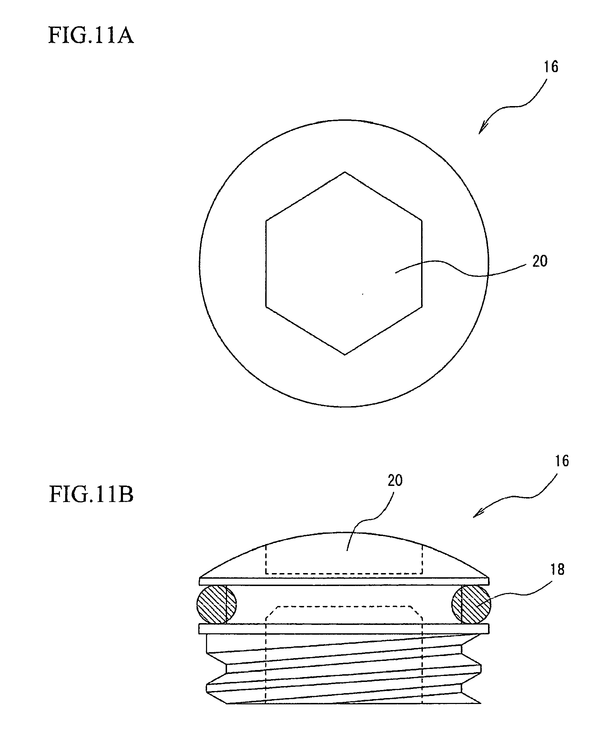

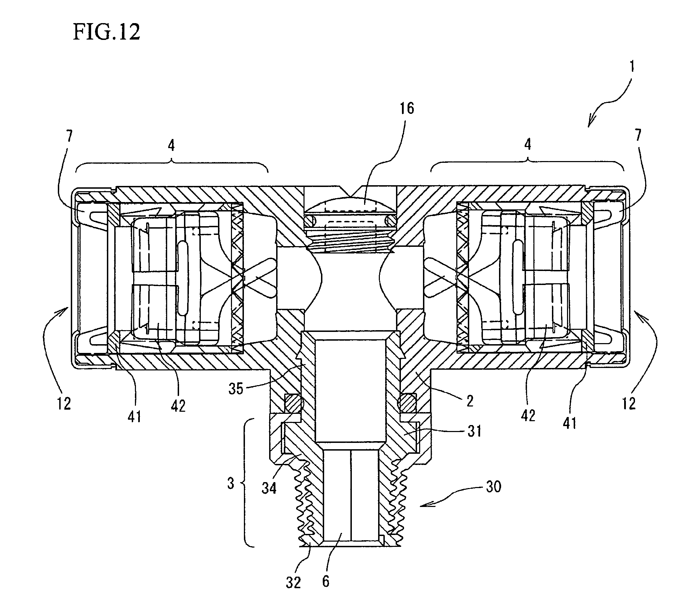

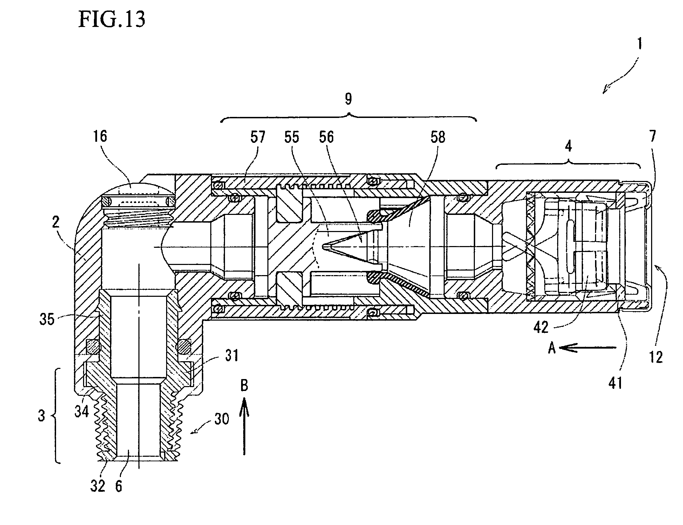

Figure 1 is a schematic view of an example of a tube fitting 1 of the first embodiment of the present invention. Figures 2A, 2B, and 2C are schematic views showing a configuration of a sleeve 41 of a connecting mechanism 5 making up the tube fitting 1 of Fig. 1 and Fig. 2A is its plan view, Fig. 2B is its front cross-sectional view and Fig. 2C is its side cross-sectional view. Figure 3A, 3B, and 3C are schematic views showing a configuration of a locking member 42 of the connecting mechanism 5 making up the tube fitting 1 of Fig. 1 and Fig. 3A is its plan view, Fig. 3B is its front view, and Fig. 3C is its side cross-sectional view. Figures 4A and 4B are schematic views showing a configuration of a screw part for attachment 3 making up the tube fitting 1 of Fig. 1 and Fig. 4A is its plan view and Fig. 4B is its front cross-sectional view. Figure 5 is an enlarged view showing a configuration of an intimate coupling part between a screw thread member 30 of the screw part for attachment 3 and an insert core 31 of the screw part for attachment 3. Figure 6 is an enlarged view showing a configuration of an outer circumferential part of the insert core 31 of the screw part for attachment 3. Figures 7A and 7B are schematic views showing a configuration of the insert core 31 of the screw part for attachment 3 and Fig. 7A is its plan view and 7B is its front view. Figure 8 is a schematic view of an example of a tube fitting 1 of a second embodiment of the present invention. Figure 9 is a schematic view of an example of a tube fitting 1 of a third embodiment of the present invention. Figure 10 is a schematic view showing a state in which a lid part 16 has been detached from the tube fitting 1 of the third embodiment. Figures 11A and 11B are schematic views showing a configuration of the lid part 16 of the tube fitting 1 of the third embodiment and Fig. 11A is its plan view and Fig. 11B is its front view. Figure 12 is a schematic view of an example of a tube fitting 1 of a fourth embodiment of the present invention. Figure 13 is a schematic view of an example of a tube fitting 1 of a fifth embodiment of the present invention.

### First Embodiment

As shown in Fig. 1, the tube fitting 1 of the first embodiment of the present invention is so configured as to have a fitting part 4 to connect and secure an external tube 60 in a rear end part 2b of a main body 2 formed to be of a tubular shape and a screw part for attachment 3 formed in a front end part 2a of the main body 2 and as to allow fluid to pass through the inside of the tube fitting 1. The external tube 60 is inserted from an opening part 12 of the fitting part 4 in an axial direction. The main body 2 is made of, for example, a PBT (Polybutylene terephthalate) resin being excellent in thermal stability, dimensional accuracy, and electrical properties. The reference number 7 shows a rubber packing formed in the opening part 12, which performs sealing by getting in an intimate touch with the main body 2 and the external tube 60 to be inserted from the opening part 12 in order to prevent the leakage of fluid passing therethrough. In the part where the opening part 12 is formed is mounted a ring-shaped cap part 50 to hold the connecting mechanism 5 and packing 7 inside the main body 2. The screw part for attachment 3 is provided with a screw thread member 30 having screw threads at its outer circumference and, in its inside part, with a tool connecting part into which a non-inverse and inverse rotation tool used to rotate the screw part for attachment 3 non-inversely and inversely is fitted and a pipe path 17 through which fluid is allowed to pass (described in detail later). The tube fitting 1 is connected by the screw part for attachment 3 to a connecting hole from or into which fluid go out or comes in an external fluid device (not shown). Thus, via the tube fitting 1, the fluid passage is formed between the external tube 60 and the external fluid device.

The configuration of the connecting mechanism 5 to be mounted in the fitting part 4 for the connection and securing of the external tube 60 is satisfactory only if the connecting mechanism performs the function of connecting and securing the external tube 60 and there is no further limitation on the configuration, however, in the case where the connecting mechanism 5 is applied to the first and second embodiments, it is necessary that the non-inverse and inverse rotation tool to be inserted from the opening part 2 as described later reaches a through hole 6. As one example of the connecting mechanism 5, the following configuration is envisioned. That is, a tube-like sleeve 41 (see Fig. 2A, 2B, and 2C) is internally fitted into the main body 2 and is secured thereto in a manner in which the axial direction of the sleeve 41 coincides with the axial direction of the main body 2. Further, a ring part 43 and a locking member 42 (see Figs. 3A, 3B, and 3C) having a plurality of extended parts 44 coming in a state being extended from the ring part 43 in an axial direction are internally fitted into the sleeve 41. The locking member 42 is configured so that the axial direction of the ring part 43 coincides with the axial direction of the sleeve 41 and so as to be movable in an axial direction in the sleeve 41 and to be rotatable non-inversely and inversely in a circumferential direction.

Figures 2A, 2B, and 2C show the configurations of the sleeve 41 (Fig. 2A is its plan view, Fig. 2B is its front cross-sectional view, and 2C is its side cross-sectional view). As shown in Figs. 2B, a notch hole 48 passing through a tubular wall is provided in the sleeve 41. In the first embodiment, the notch hole 48 is formed at two places in a manner to be symmetric with respect to the axis. Moreover, protruded parts 45 (described later) of the locking member 42 are formed on the notch hole 48 in a state of being related to each other. The sleeve 41 is made of, for example, a resin such as a POM (Polyacetal) resin.

Figures 3A, 3B, and 3C show the configurations of the locking member 42 (Fig. 3A is its plan view, Fig. 3B is its front cross-sectional view, and 3C is its side cross-sectional view). In the first embodiment, the extended parts 44 are formed at two places in a manner to be symmetric with respect to the axis of the ring part 43. The number of extended parts 44 is not limited to two, however, in the case of the two extended parts 44, a metal-mold parting line is divided into two parts, thus improving the productivity of the tube fitting 1. Each of the extended parts 44 has a shape of a semi-cylindrical part obtained by dividing a housing (using a slit) into two parts and, in its part for connection to the ring part 43 is formed a notch extending in a circumferential direction, thus enabling both the extended parts 44 to be bendable elastically in both outer directions. At the inner circumference of each of the extended parts 44 is provided a press nail 46 formed toward the inside of a diameter direction so as to be in a state of being stood. The distance D1 between the press nails 46 facing one another in a center of the axis is smaller than an inner diameter of the external tube 60 so that each nail is put, with pressure, in contact with the external tube to be inserted. By forming each nail to have, for example, a saw-blade shape, its biting force and frictional force can be enhanced. In the locking member 42 are formed the protruded parts 45 each being in a state of being stood outward in a diameter direction in the extended parts 44. Each of the protruded parts 45 is allowed to enter the notch hole 48 placed in a corresponding position so as to be movable in the notch hole 48. Further, the locking member 42 is made of, for example, a resin material having flexibility and the press nail 46 is made of stainless steel. As the resin material for the embodiment, the POM resin is suitable since it is excellent in strength, elastic constant, shock resistance property, and sliding characteristic.

The connecting mechanism 5 has momentum-giving members 47 which give momentum to the locking member 42 in a tube pulling and removing direction (upward direction in Fig. 1). In the configuration of the first embodiment, each of the momentum-giving members 47 is formed integrally with the locking member 42. More specifically, each of the momentum-giving members 47 is configured so as to come out in a state of being extended helically in a tube inserting direction (downward in Fig. 1) from the ring part 43 and so as to be formed in two places in a manner to be symmetrical with respect to the axis of the ring part 43 (see Fig. 3). It is needless that the momentum-giving member 47 may be configured as another separate member different from the locking member 42 or may be of a shape other than above, for example, a shape like a coil or the like. Each of the momentum-giving members 47 is formed so as to come out in a state of being extended from downward in a manner to correspond to each extended part 44.

In the above configuration, when an external tube 60 is inserted into the locking member 42, the locking member 42 is moved by being pushed in the tube inserting direction and, as a result, a front end part of the momentum-giving member 47 comes into contact in a state being struck with the corresponding contacted and struck part 24 of the main body 2 and is moved in a state of being slid and then the ring part 43 is bent in a ^-shaped manner (viewed horizontally), thus causing a distance between the extended parts facing each other to be increased. As a result, the distance between the extended parts facing each other, the distance between press nails 46 facing each other which is smaller than a diameter of the external tube 60 in particular, is increased which is greatly expanded so as to be larger than the diameter of the external tube 60, thus enabling the external tube 60 to enter a space part between the extended parts facing each other (in particular, between the press nails 46 facing each other). More precisely, the external tube 60 comes into the press nail 46 in a state of being slid.

Moreover, the sleeve 41 is provided with a taper surface 51 for decreasing a distance between the extended parts 44 and, as a contacted and struck part to correspond to the taper surface 51, a taper surface 52 for decreasing a distance between the extended parts 44 is formed in the locking member 42 (see Figs. 2A, 2B, and 2C and Figs. 3A, 3B, and 3C).

By configuring as above, when the external tube inserted and locked in the locking member 42 is moved in a state of being pulled in the tube pulling direction, the locking member 42 internally fitted into the sleeve 41 is also moved in a state of being pulled together with the external tube 60, thus causing the taper surface 51 for decreasing a distance between the extended parts 44 to come into contact in a state of being struck with the taper surface 52 for decreasing a distance between the extended parts 44. At this time point, by the action of force (force pushed inward in the diameter direction) that the taper surface 52 for decreasing a distance between the extended parts 44 receives from the taper surface 51 for decreasing a distance between the extended parts 44, a position of an end part on the side of the opening part 12 of the extended part 44 having the taper surface 52 for decreasing a distance between the extended parts 44 is changed inward in a diameter direction. As a result, the distance between the extended parts 44 facing each other, the distance between the press nails 46 facing each other being smaller than the outer diameter of the external tube 60 in particular, is decreased, which enables the press nail 46 to further bite the outer circumferential part of the external tube 60. That is, the larger the force that moves the external tube 60 in a state of being pulled becomes, the more the distance between the press nails 46 is decreased and, as a result, the larger the force by which the press nails 46 bite the outer circumferential part of the external tube 60 becomes, that is, the larger the pressure contact force becomes and, therefore, even if pulling and moving force becomes large, it is possible to prevent the pulling and removing of the external tube 60.

Next, the manipulation for connecting and securing an external tube 60 to the tube fitting 1 and the operation of the tube fitting 1 are described. As shown in Fig. 1, before the external tube 60 is connected to the tube fitting 1, the locking member 42 is standing still by the momentum force provided from the momentum-giving member 47 in a state facing the opening part 12 side.

In the state shown in Fig. 1, an external tube 60 is inserted by an operator through the opening part 12. At this time point, a front end part of the external tube 60 comes into contact, in a state of being struck, with an upper surface on the opening part 12 side of the press nail 46 formed on the extended part 44 and the locking member 42 internally fitted into the sleeve 41 is moved by being pushed by the external tube 60. As a result, the front end part of the momentum-giving member 47 comes into contact, in a state of being struck, with the contacted and struck part 24 of the main body 2 which causes momentum force to be generated and, when the external tube 60 is further pushed with pressure against the momentum force, the front end part of the momentum-giving member 47 and the contacted and struck part 24 are moved in a state of being slid and the ring part 43 is bent, thus causing the distance between extended part 44 facing each other (between press nails 46) to be increased. Moreover, since the ring part 43 of the locking member 42 is provided with a stopper 49 which regulates an amount of entrance of the external tube 60, more amounts of entrance of the external tube 60 than required can be prevented in the locking member 42. However, the entrance of the non-inverse and inverse rotation tool having a diameter being smaller than that of the external tube 60 is possible. Incidentally, during the above operations, as the distance between the extended parts 44 (between the press nails 46) is increased more, a place with which the front end part of the external tube 60 comes into contact in a state of being struck is changed from an upper surface on the opening part 12 side of the press nail 46 to the stopper 49.

When an operator stops the entrance of the external tube 60, the locking operation is automatically completed. This is because restoring force to return the extended part 44 in which a distance between the extended parts 44 has been forcedly increased to its original state occurs. The momentum-giving member 47 generates force to give momentum to the locking member 42 in the sleeve 41 in the tube pulling and removing direction and, therefore, if the inserting force by the external tube 60 is released, the momentum-giving member 47 presses to move the locking member 42 in the pulling and removing direction.

Incidentally, in the state where the external tube 60 is locked, the inner circumference of the packing 7 is put in an intimate contact with the outer circumference of the external tube 60 without a clearance and the outer circumference of the packing 7 is put in an intimate contact with the inner circumference of the main body 2, whereby the leakage of fluid passing therethrough can be prevented.

Next, configurations of the screw part for attachment 3 are described. As shown in Figs. 4A and 4B, the screw part for attachment 3 is so configured that the screw thread member 30 is formed at the outer circumference of the insert core 31 in a manner to be in intimate contact with each other and is used as a male screw. A larger diameter part 32 is formed at a place of a front end part 3a of the insert core 31 and another larger diameter part 34 is formed at a place of a rear end 3b (may be formed at an intermediate part being nearer the front end part 3a rather than the rear end 3b) of the insert core 31 in a manner in which a front end part and a rear end part of a thread of the screw thread member 30 are sandwiched in an axial line direction. Moreover, in the rear end 3b is formed a connecting part 35. The connecting part 35 may be configured as another separate component so as to be connected to the rear end 3b. As in the first embodiment, the connecting part 35 may be formed integrally with the insert core 31 in a manner to be connected to each other and so as to come out in a state being extended from the rear end 3b to the direction of the main body 2.

According to the first embodiment, the main body 2 is formed as another separate component and then is coupled to the connecting part 35 to constitute the tube fitting (see Fig. 1). Its sealing property is maintained by an O-ring 19. Owing to the configurations, in order to meet the requirement for producing a wide variety of the fitting parts 4 to be connected to the main body 2, common use of the screw part (the screw part for attachment 3) is realized, thereby reducing production costs and enabling large volume production.

On the other hand, the screw thread member 30 is made of a material being softer than that of the insert core 31. By configuring the screw thread member 30 as above, an advantageous effect occurs remarkably when the screw thread member 30 is so configured as to be of a taper screw shape. That is, in the case of using the softer material, compression force acts in a diameter direction during the coupling process between the male and female screws and the screw thread member 30 is put into intimate contact with another screw part (female) in a state of being deformed to fill in a clearance and to meet a shape of another screw part, which improves further the sealing property. Additionally, when the softer material is used for the screw thread member, in general, due to compression force in a diameter direction, deformation occurs, as if the screw thread member flows out, in both directions of a screwing direction and a direction reverse to the screwing direction in an axial line direction, however, according to the embodiment, both the end parts of the screw thread member 30 are sandwiched by the larger diameter part 32 formed in the front end part 3a and another larger diameter part 34 formed in the rear end 3b of the insert core 31 and, therefore, such deformation can be suppressed and the looseness of the coupling caused by the deformation can be prevented for a long time.

In order to suppress the above deformation, the suitable configuration is such that the end parts of the screw thread member 30 are sandwiched by the larger-diameter parts 32 and 34 at the position in which the deformation occurs, that is, at the outer diameter position of the crest part 21 a and root part 21 b of the screw thread member 30. However, though the sandwiching is achieved satisfactorily by making the outer diameter of the larger diameter part 32 and the larger diameter part 34 be larger than the outer diameter of the crest part 21a of the screw thread member 30, if the outer diameter of the larger diameter part 32 at the place of the front end part 3a is larger than the outer diameter of the crest part 21a of the screw thread member 30, the screwing into the female screw is made impossible. Accordingly, the optimized configurations for the suppression of the deformation by contact with entire both end parts of the screw thread of the screw thread member 30 are such that the outer diameter of the larger diameter part 34 is made larger than that of the crest part 21 a of the screw thread member 30 and the outer diameter of the larger diameter part 32 is the same as that of the crest part 21a of the screw thread member 30. To realize the above configurations, in the embodiment, screw threads 33 of the screw thread member 30 are continuously formed especially at the outer circumference of the larger diameter part 32 at the front end part 3a in the insert core 31. That is, the crest part 21a of the screw thread member 30 is coupled to its the root part 21b and a crest part 33a is coupled to its root part 33b so that these parts function as one screw and the outer diameter of the larger diameter part 32 is optimized (maximized) in an allowable range.

In addition, according to the first embodiment, as shown in Fig. 5, positions of crest parts 21a and root parts 21 b of the threads formed at the circumference of the screw member 30 coincide, in an axial line direction, with positions of crest parts 36a and root parts 36b of the threads 36 formed at the circumference of the insert core 31. Thus, by uniformly using a relatively hard material (for example, a high-strength resin) for the insert core 31 and a relatively soft material (for example, a resin) for the screw thread member 30 formed at its outer circumference, the configuration is obtained in which the breakage caused by rotation of the insert core 31 using a tool can be avoided, and missing, deformation, secular change of the screw thread in the screw thread member 30 attributable to high load caused by screwing can be prevented.

Further, as shown in Fig. 6, at the outer circumference of the insert core 31 is formed a plurality of convex-shaped ribs 37 each partitioning root parts 36b of thread 36 forming the screw shape in a circumferential direction. Moreover, as shown in Figs. 7A and 7B (Fig. 7A is its plan view and Fig. 7B is its front view), at the outer circumference of the insert core 31 are formed a plurality of protruded parts 38 extending in the axial direction and a plurality of grooves 39 and these protruded parts 38 and grooves 39 are covered by the extended part 22 (see Figs. 4A and 4B). By configuring as above, even if high load is imposed between the insert core 31 and screw thread member 30, positional deviation and deformation of both the insert core 31 and screw thread member 30 in the circumferential direction in particular and/or aged deterioration can be prevented.

Here, for example, a polyamide MXD6 resin or polyphenyl sulfide resin can be suitably used as the material for the insert core 31. The polyamide MXD6 resin is excellent in strength, thermal resistance, elastic strength, chemical resistance, and dimensional stability. In the insert core 31 made of the polyamide MXD6 resin, the insertion and use of a tool is allowed. The polyamide MXD6 is a material capable of withstanding high load imposed when being used as a screw member and its performance can be further improved by having a glass fiber content of 50%. The optimum material is Reny (registered trademark of Mitsubishi Gas Chemical Company, Inc.). Also, polyphenyl sulfide resin is extremely high in strength and stiffness and excellent in abrasion resistance. Toughness of the polyphenyl sulfide resin is lower than that of the polyamide MXD6, however, its food safety is high. The application of the polyphenyl sulfide resin to parts being in contact with food equipment and kitchen appliances and tap drinking water is permitted by US FDA (Food and Drug Administration) and US NSF (National Science Foundation) and, therefore, the polyphenyl sulfide resin can be used as an optimum material for screw applications.

On the other hand, the PBT resin or the like can be used suitably as a material for the screw thread member 30. The PBT resin is excellent in thermal stability, dimensional accuracy, and electrical properties and, therefore, can be suitably used as a material for screw parts formed at an outer circumference.

By configuring as above, the screw part for attachment 3 making up a tube fitting 1, which has been conventionally made of a metal material, can be made of a resin material and the configuration can be realized in which the screw part for attachment can withstand high load imposed at time of the attachment and in which manufacturing costs can be reduced. Moreover, the screw part for attachment 3 has high sealing property and can prevent the looseness in coupling for a long time and, therefore, is suitably used as screws for pipes. The screw part for attachment 3 can increase versatility as a taper pipe male thread by forming the screws according to standards such as JIS B 0203 or the like.

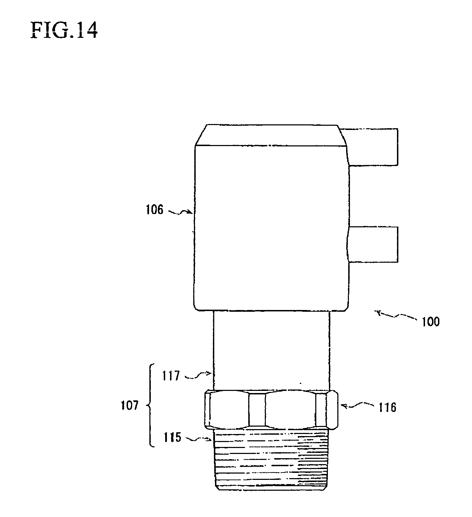

In the case of the conventional screw to be used for a tube fitting, a pipe path is formed inside the screw and, therefore, a tool connecting part to connect the tool for rotation is provided in an outer circumferential part (see Fig. 14) of the tube fitting 100. As a result, problems arise in that events occur frequently in which, at time of attaching the tube fitting 100 to another external tube in a narrow place, the non-inverse and inverse rotation tool cannot be connected to the tool connecting part or even if the above tool can be connected to the tool connecting part, the non-inverse and inverse rotation tool itself cannot be rotated, thus causing the attachment of the tube fitting to another pipe to be impossible.

Further, in the case where the outer circumferential part of the screw part for attachment, that is, the screw thread member 30 is made of a soft material as in the case of this embodiment, the use of the tool connecting part is improper. Moreover, if the insert core 31 is to be formed on the extended part which comes out in a state of being extended long in the direction of its rear end 3b, without being formed straightly on the extended part 22 of the screw thread member 30, the forming method produces another problem of being devoid of compactness.

According to the embodiment, the above problems can be solved by providing, in the inside part of the screw part for attachment 3, the configuration in which the pipe path and tool connecting part can be commonly used. More specifically, the cross section able to be commonly used as the pipe path and the tool connecting part to allow the non-inverse and inverse rotation tool to rotate the screw part for attachment 3 to be fitted is formed inside the insert core 31 making up the screw part for pipe attachment so that the cross section part passes through the polygonal through hole 6 in a manner to go through the center of a diameter of the insert core 31 in the axial direction. Additionally, the opening part 12 of the fitting part 4 is formed so as to be large enough to allow the non-inverse and inverse rotation tool to be inserted and rotated.

The through hole 6 is formed so that a cross section making up its part or all part in the axial direction is, for example, regularly polygonal as shown in Fig. 4A. This enables a general-use hexagonal wrench to be used for screwing for the attachment. However, the cross-sectional shape of the through hole 6 is not limited to the regular hexagonal shape and the through hole 6 may have any polygonal shape other than the hexagon (for example, star-like shape) or any shape formed of a curve other than a regular circle such as an ellipse.

When a tube fitting 1 is to be attached to another external tube, conventionally, the attachment is performed by connecting a non-inverse and inverse rotation tool such as a spanner to a tool connecting part formed at a circumference of the tube fitting to rotate a screw part for attachment. However, according to the first embodiment of the present invention, by configuring as above, the non-inverse and inverse rotation tool such as a hexagonal wrench is allowed to be inserted in the inside part of the screw part for attachment 3 in an axial direction to enable the connection (insertion) of the tool and its non-inverse and inverse rotation and therefore, unlike the conventional tube fitting requiring wide space for the non-inverse and inverse rotation, the screw part for attachment can be rotated, even in a narrow place, non-inversely and inversely to attach the tube fitting to another external tube. Moreover, the use of an electric rotation tool is made possible, which enables easy attachment of the tube fitting to another pipe in a short time.

### Second Embodiment

Next, a tube fitting 1 of the second embodiment is described. As shown in Fig. 8, configurations of the tube fitting of the second embodiment differ from those of the first embodiment in that no connecting part employed in the first embodiment at the rear end 3b of the screw part is provided and in that a tube-like main body 2 and a screw thread member 30 are integrally informed by using the resin used in the first embodiment. By configuring as above, it is made possible to reduce a component count and manufacturing processes, thereby decreasing manufacturing costs.

### Third Embodiment

Next, a tube fitting 1 of the third embodiment is described. Configurations of the tube fitting 1 of the third embodiment differ from those of the first embodiment in that a central axis of an opening part 12 does not coincide with a central axis of a pipe path, that is, a central axis of a through hole 6. More specifically, as shown in Fig. 9, a screw part for attachment 3 is connected to a main body 2 (or may be integrally formed as in the second embodiment) so that a central axis of the screw part for attachment 3 coincides with that of the main body 2 (here, the central axis of the screw part for attachment 3 may coincides with that of the through hole 6) and the main body 2 is connected to a fitting part 4 (in the third embodiment, the main body 2 and the fitting part 4 are integrally formed) so that the central axis of the main body 2 and the fitting part 4 form an angle not being 0 degrees (in the embodiment, 90 degrees).

The tube fitting 1 having the above configurations is generally called an L-shaped tube fitting or L-type tube fitting. Unlike in the case of the first and second embodiments, a non-inverse and inverse rotation tool cannot be inserted from the opening part 12 of the fitting part 4 to fit the rotation tool into a tool connecting part, that is, the through hole 6. The feature of the third embodiment is that a tool insertion opening 14 being large enough to insert a non-inverse and inverse rotation tool for rotation is provided in the main body 2. It is needless to say that the fitting part 4 may be formed.

According to the third embodiment, as shown in Figs. 9 to 11, the tool insertion opening 14 is formed in the main body 2 so that its central axis coincides with a central axis of the through hole 6. A pipe path 17 formed in the inside part of the main body 2 so that its central axis coincides with the central axis of the through hole 6 serves also as an inserting path of the non-inverse and inverse rotation tool. Thus, the inserting path of the non-inverse and inverse rotation tool from the tool insertion opening 14 through the pipe path 17 up to the through hole 6 can be formed. It is not necessary that the central axes of the tool insertion opening 14 and pipe path 17 coincide with the central axis of the through hole 6 and the shapes of the tool insertion opening 14 and pipe path 17 are not limited to any specified one so long as the non-inverse and inverse rotation tool is allowed to be inserted for rotation.

On the other hand, the tool insertion opening 14, since sealing is required when fluid is allowed to pass, has a lid part 16 to hermetically seal and open the tool insertion opening 14. According to the embodiment, sealing is performed to prevent the leakage of fluid by placing an O-ring 18 between the tool insertion opening 14 and the lid part 16. Figure 9 shows a state in which the lid part 16 is attached and Fig. 10 shows a state in which the lid part 16 is detached. The screwing method using screws is employed to connect the tool insertion opening 14 and lid part 16, however, the method is not limited to this. As a tool for the connection, any tool such as a driver, wrench, or the like can be used and an upper surface of the lid part 16 is formed to have a suitable shape corresponding to the tool. As shown in Figs. 11A and 11B (Fig. 11A is its plan view and Fig. 11B is its front view), according to the embodiment, the upper surface of the lid part 16 is formed as a regularly hexagonal hole having a shape for the tool connection so that the lid part 16 is rotated non-inversely and inversely by using a general-use hexagonal wrench 61 (Reference No. 20 in Fig. 11A and 11B). Moreover, by making the size of the hole (regular hexagon) coincide with the size of a cross section of the through hole 6, non-inverse and inverse rotation is made possible by using a general-use non-inverse and inverse rotation tool (hexagonal wrench) 61, which provides high efficiency.

The main body 2 and screw part for attachment 3 are coaxially formed and, therefore, are rotated non-inversely and inversely. By configuring as above, even in the case where the fitting part 4 cannot be rotated non-inversely and inversely such as a case of attachment in a narrow place, it is made possible to rotate only the screw part for attachment with the direction being fixed so that the tube fitting 1 is attached.

### Fourth Embodiment

Next, a tube fitting 1 of the fourth embodiment is described. Configurations of the tube fitting 1 of the fourth embodiment differ from those of the third embodiment in that the tube fitting 1 has a plurality of fitting parts 4. As shown in Fig. 12, the tube fitting 1 of the embodiment has the configuration in which two fitting parts are connected to the main body 2 (in the embodiment, the two fittings are integrally formed) and the tube fitting 1 of this type is generally called a T-shaped fitting part, T-type fitting part, or the like. The tube fitting 1 of the fourth embodiment has the same configurations as the tube fitting of the third embodiment except the number of fitting parts 4 and their descriptions are omitted accordingly. The configuration having three or more fitting parts is also envisioned.

### Fifth Embodiment

Next, a tube fitting 1 of the fifth embodiment is described. The tube fitting 1 of the fifth embodiment is based on the configuration of the third embodiment and is provided with a flow rate control mechanism 9 to adjust the flow rate of fluid passing between the fitting part 4 and screw part for attachment 3. The flow rate control mechanism 9 may have a variety of configurations. For example, there is a configuration shown in Fig. 13 in which the flow rate control mechanism 9 adjusts the flow rate of fluid passing therethrough by moving a needle 55 having a V-shaped notch part 56 at its front end part by using an adjusting dial 57 to expand or reduce an area of a flow path formed by the notch part 56 and check valve 58. In Fig. 13, the arrow A shows the direction of controlled flow and the arrow B shows the direction of free flow. As described above, according to the present invention, the screw part for attachment 3, which has been formed using a metal material in the conventional tube fitting, can be made of a resin material and, as a result, can withstand torque imposed at time of attachment, thus reducing manufacturing costs. By using a soft material for the screw thread member of the screw part for attachment 3, intimate contact with screws to be screwed is increased, thereby enabling sealing property of the connection part to be increased and, further, more deformation than required in the screw thread material can be prevented, thereby enabling looseness of the coupling caused by the deformation to be avoided for a long time. Moreover, by providing the tool connecting part to couple the non-inverse and inverse rotation tool for screwing the screw part for attachment 3 in the inside part of the screw part for attachment, not at the circumference of the screw part for attachment 3, even in a narrow attaching place, the non-inverse and inverse rotation tool can be easily attached unlike in the case of the conventional tube fitting in which the rotation tool cannot be rotated making it impossible to perform attaching.

It is apparent that the present invention is not limited to the above embodiments but may be changed and modified without departing from the scope of the invention.

## Claims

1. A tube titling (1) comprising:
one or a plurality of fitting parts (4), which can be connected to an external tube or tubes (60), being formed at one end of a main body (2):
a screw part for attachment (3) being formed at the other end of the main body (2); and
an inside part through which a fluid passes,
wherein,
the external tube or tubes (60) are inserted into an opening part or parts(12),
the screw part for attachment (3) has an external circumference, on which screw threads are formed,
a tool connecting part, into which a rotation tool (61) can be inserted to rotate the screw part for attachment (3), and a pipe path (17), through which the fluid passes, are formed in the inside of the screw part for attachment (3),
a central axis of the opening part (12) is not coincided with that of the pipe path (17),
the main body (2) has a tool insertion opening (14), which is large enough to allow the rotation tool (61) to be inserted into and rotated in the main body (2), and
a lid part (16) is provided to the tool insertion opening (14) so as to hermetically seal or open the tool insertion opening (14).

2. A tube fitting (1) comprising:
one or a plurality of fitting parts (4), which can be connected to an external tube or tubes (60), being formed at one end of a main body (2):
a screw part for attachment (3) being formed at the other end of the main body (2); and
an inside part through which a fluid passes,
wherein,
the screw part for attachment (3) has an external circumference, on which screw threads are formed,
a tool connecting part, into which a rotation tool (61) can be inserted to rotate the screw part for attachment (3), and a pipe path (17), through which the fluid passes, are formed in the inside of the screw part for attachment (3), and
the screw part for attachment (3) has an insert core (31) in a central part in an axial direction and, at an external circumference of the insert core (31), a screw thread member (30) having mail-screw shaped screw threads made of a material being softer than a material for the insert core (31) is formed in a state of being intimately contacted to the insert core (31).

3. The tube fitting (1) according to Claim 1 or 2, wherein part or all of the pipe path (17) is formed in the tool connecting part into which a non-inverse and inverse rotation tool to rotate the screw part for attachment (3) non-inversely or inversely is inserted so as to be fitted.

4. The tube fitting (1) according to Claim 2 or 3, wherein the fitting part (4) is provided with an opening part (12) into which the external tube (60) is inserted and the opening part (12) is formed so as to be large enough to allow the non-inverse and inverse rotation tool to be inserted for non-inverse and inverse rotation.

5. The tube fitting (1) according to any one of Claims 1-4, wherein the main body (2) and the screw part for attachment (3) are coaxially formed and connected to each other so as to be rotated non-inversely and inversely.

6. The tube fitting (1) according to any one of Claims 1-5, further comprising a flow rate control mechanism (9) to adjust a flow rate of fluid passing between the fitting part (4) and the screw part for attachment (3).

7. The tube fitting (1) according to Claim 1, wherein the screw part for attachment (3) has an insert core (31) in a central part in an axial direction and, at an external circumference of the insert core (31), a screw thread member (30) having mail-screw shaped screw threads made of a material being softer than a material for the insert core (31) is formed in a state of being intimately contacted to the insert core (31).

8. The tube fitting (4) according to any one of Claims 2-7, wherein the insert core (31) is provided with the pipe path (17).

9. The tube fitting (4) according to any one of Claims 3- 8, wherein a cross section of a part serving also as the tool connecting part in the pipe path (17) has a shape of any one of a polygon and an elliptic through hole (6).

10. The tube fitting (4) according to any one of Claims 2-9, wherein the screw thread member (30) is sandwiched by larger-diameter parts (32, 34) each formed in a front end part (3a) of the insert core (31) and in any one of a rear end part (3b) of the insert core (31) and an intermediate part being nearer to the front end part (3a) rather than the rear end part (3b) of the insert core (31),
wherein preferably, at an external circumference of the larger-diameter part (32) formed in the front end part (3a) of the insert core (31), screw threads (33) are formed continuously with the screw threads of the screw thread member (30).

11. The tube fitting (1) according to any one of Claims 2-10, wherein the screw thread member (30, 33) is formed so as to have a tapered screw shape.

12. The tube fitting (1) according to any one of Claims 2-11, wherein positions of crest parts (21a) and root parts (2 1 b) of the threads formed at the circumference of the screw thread member (30) coincide, in an axial line direction, with positions of crest parts (36a) and root parts (36b) of the threads (36) formed at the circumference of the insert core (31),
wherein preferably, at an external circumference of the insert core (31), a plurality of ribs (37), each rib partitioning root parts (36b) of thread (36) making up the screw shape, is formed in a circumferential direction.

13. The tube fitting (1) according to any one of Claims 2-12, wherein, at an external circumference of the insert core (31), any one of groups of a plurality of protruded parts (38) extending in an axial direction and a plurality of grooves (39) is formed.

14. The tube fitting (1) according to any one of Claims 2-13, wherein the insert core (31) is made of any one of a polyamide MXD6 resin and a polyphenyl sulfide resin.

15. The tube fitting (1) according to any one of Claims 2-14, wherein the screw thread member (30) formed in a state of being intimately contacted with the insert core (31) is made of a polybutylene terephthalate resin.
